# EUROPÄISCHE PATENTSCHRIFT

(11) **EP 1 018 054 B1**
(45) Veröffentlichungstag und Bekanntmachung des Hinweises auf die Patenterteilung: **24.10.2001**
(21) Anmeldenummer: 98948717.8
(22) Anmeldetag: 04.08.1998
(51) Int. Cl.: G02B 21/24

(54) **MIKROSKOPSTATIV FÜR EIN WAFERINSPEKTIONSMIKROSKOP**
MICROSCOPE STAND FOR A WAFER INSPECTION MICROSCOPE
SUPPORT POUR UN MICROSCOPE DE CONTROLE DE WAFERS

(30) Priorität: 27.09.1997 DE 19742802
(43) Veröffentlichungstag der Anmeldung: 12.07.2000
(73) Patentinhaber: Leica Microsystems Wetzlar GmbH, 35578 Wetzlar (DE)
(72) Erfinder: KACZYNSKI, Ulrich, D-61231 Bad Nauheim (DE); HEDRICH, Roland, D-35630 Ehringshausen (DE)
(74) Vertreter: Reichert, Werner F., Dr.
(86) Internationale Anmeldenummer: DE9802230
(87) Internationale Veröffentlichungsnummer: WO9917146

(56) Entgegenhaltungen:
- GB-A- 2 235 062
- US-A- 4 328 713
- US-A- 5 450 233
- US-A- 5 552 928

## Beschreibung

Die Erfindung betrifft ein Mikroskopstativ für ein Waferinspektionsmikroskop gemäß dem Oberbegriff des Anspruchs 1.

In der Halbleiterindustrie werden Inspektionsmikroskope zur Prüfung der Fertigungsstadien von Wafem bzw. Halbleiter-Bausteinen eingesetzt. Sie verfügen vielfach über die Möglichkeit der automatischen Waferzuführung aus Wafer-Aufbewahrungskassetten. Zu jeder mikroskopischen Untersuchung wird dabei automatisch jeweils ein einzelner Wafer aus einer Kassette entnommen und nach der Untersuchung wieder in derselben oder einer anderen Kassette abgelegt.

In der Waferproduktion werden in sogenannten "Clustern" im Produktionsbereich mehrere Fertigungs- und Prüfschritte räumlich eng nebeneinanderliegend angeordnet, um die kostenintensive Reinraumfläche optimal auszunutzen. Die untersuchten und bearbeiteten Wafer werden von einem Bearbeitungsschritt zum nächsten weitergegeben, ohne wieder in die für sie vorgesehenen Aufbewahrungskassetten abgelegt zu werden. Die Anordnung der einzelnen Arbeitsgänge in einem Cluster ist in klassischer Weise nebeneinander vor einer Wand. Direkt vor der Wand ist eine Art Transportband für die Wafer vorgesehen, von denen die Wafer für die einzelnen Arbeitsgänge entnommen bzw. dort wieder abgelegt werden können. Vor dem Transportsystem sind die einzelnen Fertigungs- bzw. Prüfeinheiten angeordnet und davor wiederum die Arbeitsplätze für das Bedienpersonal. Dies erfordert, daß jede Bearbeitungseinheit oder auch Prüfeinheit sich in der Reihe anordnen und von hinten beschicken läßt.

Bei den bisher bekannten klassischen Mikroskopen in sogenannter "C"-Bauweise bilden in Seitenansicht der Stativfuß, die Stativsäule und das Querhaupt ein zum Benutzer offenes "C". Die gattungsbildende DE 196 01 731 A1 beschreibt ein solches Mikroskop. In Frontansicht ist das Querhaupt mit zugeordnetem Objektiv in einem Abstand über dem Stativfuß mit zugeordnetem Kondensor und die Stativsäule hinter diesen beiden angeordnet. Der Stativfuß trägt den Objekttisch, der aus Beobachtersicht von links, rechts und vorne für den Benutzer zugänglich ist. Eine Probenbeschickung des Objekttisches von hinten ist jedoch nicht möglich.

Auch das Mikroskop MX50 der Fa. Olympus weist ein "C-Stativ" auf. Einzelheiten gehen aus dem Firmenprospekt "Halbleiter-Inspektions-Mikroskop MX50", Art.Nr. 30798, zu diesem Mikroskop hervor. Links neben dem Mikroskop ist eine Feederstation angeschlossen. Eine solche Feederstation umfaßt in der Regel eine Wafer-Aufbewahrungskassette für die zu untersuchenden Wafer und mindestens eine weitere für die untersuchten Wafer sowie ein Handlingsystem zum Transport der Wafer zwischen den Aufbewahrungskassetten und dem Objekttisch. Die Waferzufuhr zum Objekttisch des Mikroskops erfolgt dabei von links. Die Aufbewahrungskassetten mit den Wafem müssen manuell in den Feeder eingesetzt und auch manuell wieder entnommen werden.

Dies widerspricht dem üblichen Bearbeitungsgang in einem Cluster, bei dem die einzelnen Wafer automatisch von einem Transportband den Prüfstationen von der Rückseite zugeführt werden und nach der Prüfung auch nach dorthin wieder zum Transportband abgegeben werden. Vielmehr müssen zur Einbindung eines vorbekannten Inspektionsmikroskops mit Feeder-Station in den Cluster-Betrieb nach Möglichkeit das Wafer-Transportband und die Feeder-Station mit Verbindungselementen aneinander adaptiert werden, Dabei ist es nicht immer möglich, das Inspektionsmikroskop mit dem Feeder in der Reihe neben den anderen Untersuchungseinheiten in dem Cluster anzuordnen. Häufig muß es zur Einbindung in die anderen Prozeßschritte schräg in den Raum gestellt werden, so daß es in den engen Gang für die Arbeitsplätze des Bedienpersonals hineinragt. Dabei wird zusätzlich kostenintensive Reinraumfläche benötigt.

Oft ist eine solche Adaption gar nicht möglich. Dann bleibt weiterhin die manuelle Waferversorgung des Feeders mit Waferkassetten und damit regelmäßiger Personaleinsatz erforderlich, was einen noch größeren Nachteil für den Betrieb darstellt.

Der Nachteil der vorbekannten klassischen Mikroskop-Stative in "C"-Bauweise besteht also darin, daß keine Beschickung des Mikroskop-Objekttisches von hinten möglich ist, wie in der Halbleiterindustrie erforderlich.

Als Ergänzung zu diesen klassischen Mikroskopen beschreibt daher die US 4,582,191 ein spezielles ringförmiges Transport- und Handlingsystem, welches in einem Abstand um die Stativsäule herum angeordnet ist. Ein mit Gleitschienen versehener, feststehender Standring wird von einem Winkelstück getragen, das mit der Stativsäule verschraubt wird. Auf den Gleitschienen ist ein zweiter, konzentrischer Transportring verfahrbar angeordnet, der mit Wafer-Haltevorrichtungen ausgestattet ist. Diesem ringförmigen Transportsystem werden die Wafer aus einer Aufbewahrungskassette über eine seitliche Fließbandvorrichtung zugeführt und motorisch um die Stativsäule herum verfahren. Mit dem beschriebenen Transportsystem können daher auch Wafer von der Rückseite der Stativsäule um diese herum zur Vorderseite geführt werden. Dort wird der Wafer dem Objekttisch übergeben, auf dem zusätzlich ein spezieller Höhenadapter mit Wafer-Vakuumhalterung montiert ist.

Ein Nachteil des beschriebenen Systems besteht darin, daß das ringförmige Transportsystem an der Stativsäule befestigt wird. Ein Mikroskop der für die erwähnten Untersuchungen erforderlichen Leistungsklasse ist ein sehr empfindliches Gerät, das bezüglich geringem Schwingungsverhalten und hoher Statik in seiner Konstruktion genauest abgestimmt ist. So beeinflußt jede vom Hersteller nicht vorgesehene, zusätzlich angebrachte Masse, wie z. B. das ringförmige Transportsystem, die ausgewogene Statik und beeinträchtigt damit das Abbildungsverhalten des Mikroskops. Außerdem können sich die Vibrationen des Antriebsmotors des ringförmigen Transportsystems störend auf das Stativ übertragen.

Darüber hinaus erzeugt das ringförmige Transportsystem mit seinem Motor und seinen aufeinandergleitenden Führungselementen zusätzliche unerwünschte Kontaminationen in den Reinräumen. Außerdem vergrößert das Ring-Transportsystem durch seine Abmessungen die Aufstellfläche des Mikroskops zusätzlich und nimmt damit teure Reinraum-Grundfläche in Anspruch.

Die Problematik der Einbindung von Inspektionsmikroskopen in die Fertigungslinien der Halbleiterindustrie stellt sich daher selbst bei einem modernen Inspektionsmikroskop - wie den beispielsweise genannten - und bei Verwendung von Hilfstransportsystemen als dringlich dar, da der Aufwand für Umbau- und Adaptionsmaßnahmen, hoher Platzverbrauch an Reinraum-grundfläche, Reinraumkontaminationen, unrationelle Arbeitabläufe und hoher Personaleinsatz direkt auf die Produktionskosten schlagen.

Es ist daher die Aufgabe dieser Erfindung, ein Mikroskopstativ mit geringer Stellfläche für ein Waferinspektionsmikroskop anzugeben, welches eine erhöhte Freiheit bei der Beschickung des Objekttisches mit großflächigen Wafem gewährleistet. Es soll keine zusätzlichen Kontaminationen in den Reinraum einbringen. Darüber hinaus soll das neue Stativ auch Untersuchungen an großflächigen Objekten erlauben, um zukünftigen Anforderungen der Halbleiterindustrie bezüglich der Untersuchung an großflächigen Wafem zu genügen.

Diese Aufgabe wird erfindungsgemäß gelöst durch den kennzeichnenden Teil des Patentanspruchs 1. Weitere vorteilhafte Weiterbildungen sind Gegenstand der Unteransprüche.

Bei den bekannten klassischen Mikroskop-Stativformen wird durch die das Objektiv und den Kondensor durchlaufende vertikale optische Achse und die horizontale Achse des Querhaupt-Strahlengangs eine "konstruktive Geräte-Symmetrieebene" aufgespannt. Der Erfindung liegt nun die Idee zugrunde, die Stativsäule nicht mehr als unmittelbar verbindendes Element zwischen Stativfuß und Querhaupt anzuordnen, sondern daneben, um dadurch auch eine Probenbeschickung von hinten - also von der dem Bediener abgewandten Seite - zu ermöglichen. Dazu wird die Stativsäule außerhalb der früheren "Geräte-Symmetrieebene" positioniert, und zwar im vom Mikroskop-Betrachter abgewandten hinteren Stativbereich rechts oder links. Dies wird erreicht durch eine einzige seitlich neben dem Stativfuß und dem in einem Abstand darüber befindlichen Querhaupt angesetzte Stativsäule.

Damit wird als herausragende neue Eigenschaft des Stativs die freie Belademöglichkeit von hinten erzielt, also aus Richtung der Stativsäule zusätzlich zu den üblichen Beschickungsrichtungen von den Seiten und auch von vorne. Durch geeignete Anordnung und Ausbildung der Stativsäule ist die Untersuchung selbst sehr großflächiger Objekte möglich, weil sich ein erweiterter Verfahrbereich für den Objekttisch ergibt.

Die Erfindung wird im folgenden anhand der schematischen Zeichnungen genauer beschrieben.

Es zeigen:
- **Fig. 1a-1d:**: ein erstes erfindungsgemäßes Ausführungsbeispiel, nämlich
- **Fig. 1a:**: die linke Seitenansicht,
- **Fig. 1b:**: die rechte Seitenansicht,
- **Fig. 1c:**: die Frontansicht,
- **Fig. 1d:**: die Draufsicht,
- **Fig. 2a-2d:**: ein zweites erfindungsgemäßes Ausführungsbeispiel mit extrem großem Verfahrbereich des Objekttisches, nämlich

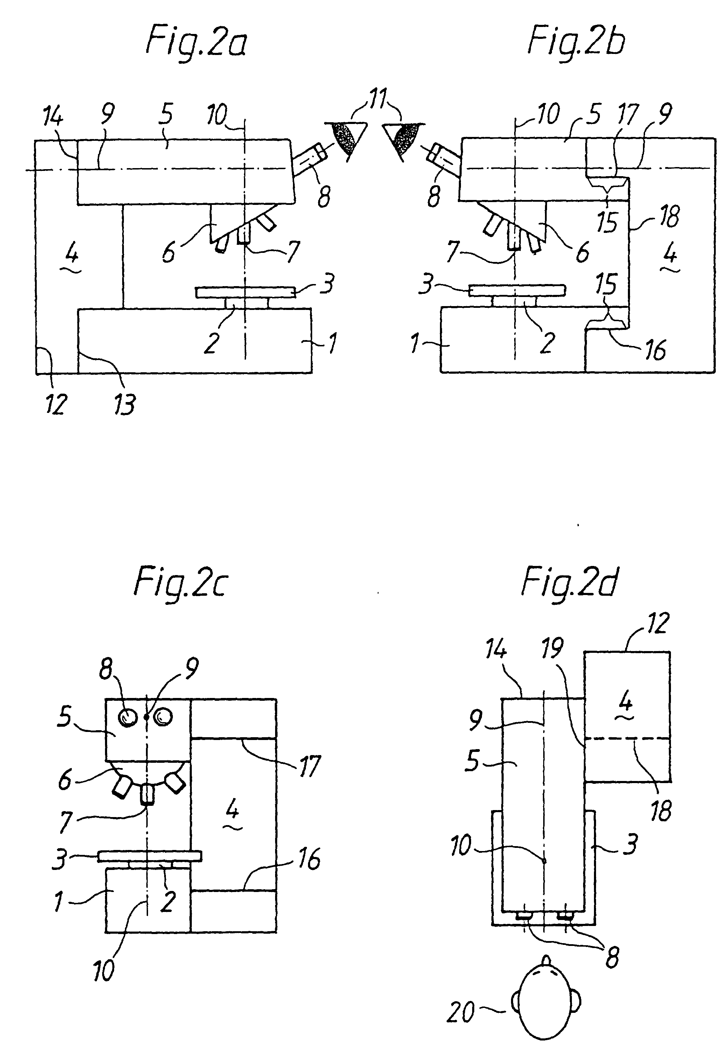

- **Fig. 2a:**: die linke Seitenansicht,
- **Fig. 2b:**: die rechte Seitenansicht,
- **Fig. 2c:**: die Frontansicht,
- **Fig. 2d:**: die Draufsicht,

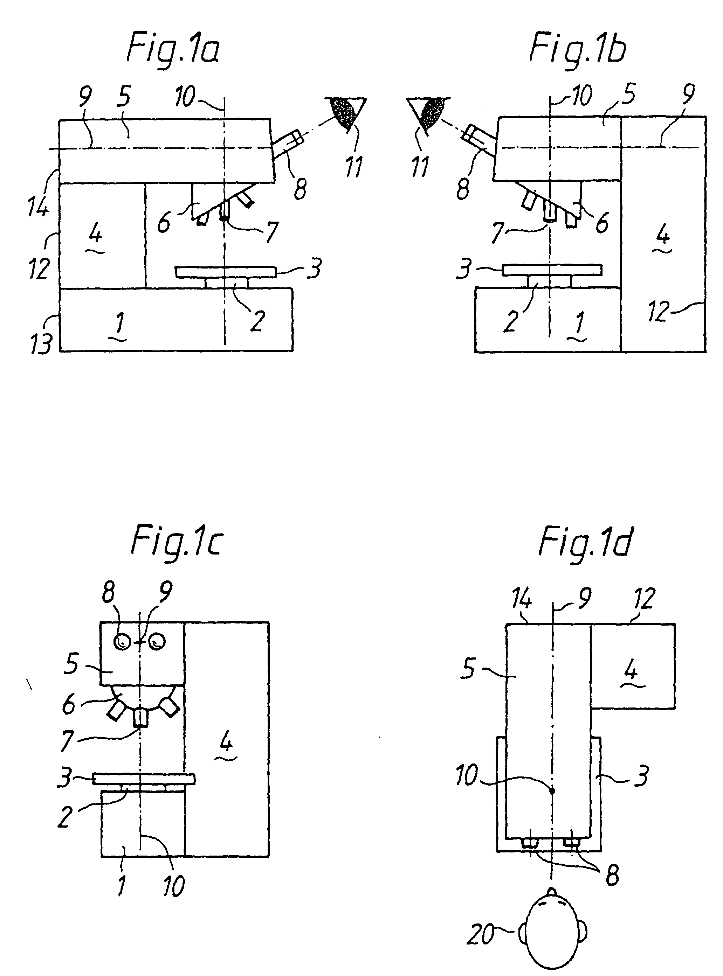

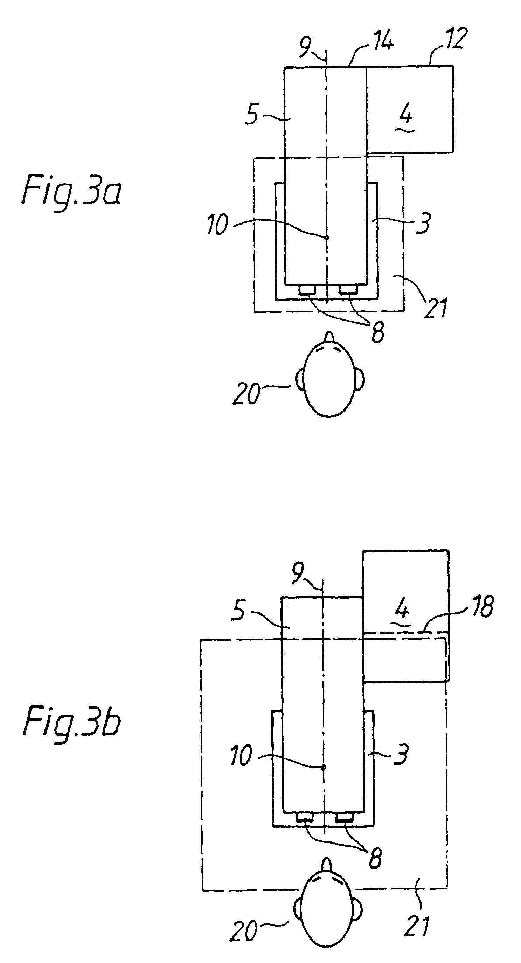

- **Fig. 3a:**: das Stativ gemäß Fig. 1d mit angegebenem Tischverfahrbereich,
- **Fig. 3b:**: das Stativ gemäß Fig. 2d mit angegebenem extrem großen Tischverfahrbereich,

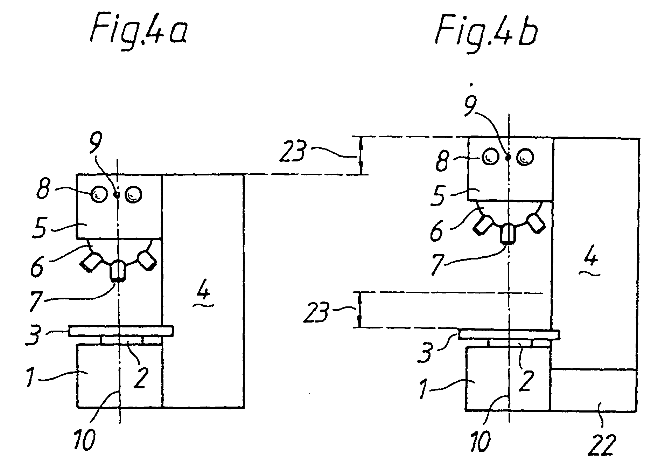

- **Fig. 4a:**: ein Ausführungsbeispiel gemäß Fig. 1c mit markierter Säulenhöhe,
- **Fig. 4b:**: ein drittes Ausführungsbeispiel mit Säulenverlängerung gegenüber Fig. 4a.

Die klassische Stativform mit Stativfuß, Stativsäule und Querhaupt in Form eines großen abgewinkelten "C" ist bei dem erfindungsgemäßen Mikroskop sowohl in Seitenansicht als auch zusätzlich in Frontansicht zu erkennen. Dazu ist das neue Mikroskopstativ sowohl in den beiden Seitenansichten als auch in der Frontansicht und in der Draufsicht dargestellt.

**Fig. 1a** zeigt die Seitenansicht eines ersten Ausführungsbeispiels von links, **Fig. 1b** zeigt die Seitenansicht von rechts. In beiden Figuren ist der klassische Stativaufbau in Form eines großen "C" zu erkennen. Dargestellt sind die wesentlichen Teile des Mikroskopstativs, also ein Stativfuß 1 mit einem integrierten Kondensor 2 und einem darüber angeordneten Objekttisch 3, femer eine Stativsäule 4, ein Querhaupt 5 mit einer Objektiveinrichtung 6 und daran befindlichen Mikroobjektiven 7. Im Querhaupt 5 integriert ist ein hier nicht näher dargestellter Tubus mit einer Okulareinrichtung 8. Durch den horizontalen Strahlengang im Querhaupt 5 wird eine horizontale optische Achse 9 des Querhaupts 5 festgelegt. Der durch das in Arbeitsposition befindliche Mikroobjektiv 7 und den Kondensor 6 verlaufende vertikale Strahlengang legt eine vertikale optische Achse 10 des Mikroskops fest. Ebenfalls dargestellt ist ein Betrachter 11. In der dargestellten Ausführungsform schließt eine aus der Sicht des Betrachters 11 hintere Fläche 12 der Stativsäule 4 mit einer hinteren Fläche 13 des Stativfußes 1 und einer hinteren Fläche 14 des Querhaupts 5 in derselben Ebene ab.

In **Fig. 1a** befinden sich der Stativfuß 1 und das Querhaupt 5 im Vordergrund der Darstellung, die Stativsäule 4 ist hinter beiden angeordnet und oben vom Querhaupt 5 sowie unten vom Stativfuß 1 verdeckt. In der **Fig. 1b** sind der Stativfuß 1 und das Querhaupt 5 im Hintergrund angeordnet. Davor steht die Stativsäule 4. Sie verdeckt in dieser Ansicht die jeweils in dieser Darstellung rechts befindlichen hinteren Anteile von Stativfuß 1 und Querhaupt 5. Daher ist nur die hintere Fläche 12 der Stativsäule 4 zu erkennen. In beiden **Figuren 1a** und **1b** ist also die klassisch bekannte "C"-Form bereits bekannter Mikroskopstative wiedererkennbar.

In **Fig. 1c,** der Frontansicht, wird nun die wesentliche Neuerung des erfindungsgemäßen Stativs erkennbar. Unten ist der Stativfuß 1 mit dem Kondensor 2 und dem Objekttisch 3 dargestellt. Darüber befindet sich in einem Abstand das Querhaupt 5 mit der Objektiveinrichtung 6 und den Objektiven 7 sowie der Okulareinrichtung 8. Die horizontale optische Achse 9 des Querhaupts 5 ist in dieser Ansicht ebenfalls nur in Frontansicht zu erkennen und daher nur als ein Punkt dargestellt. Die vertikale optische Achse 10 durch das Arbeitsobjektiv 7 und den Kondensor 2 erscheint in dieser Ansicht als Symmetrieachse des Stativfußes 1 und des Querhaupts 5. Während nun bei bisher bekannten klassischen Stativformen die Stativsäule 4 stets hinter dem Stativfuß 1 und dem Querhaupt 5 - und zwar symmetrisch zu der vertikalen optischen Achse 10 - positioniert ist, befindet sich erfindungsgemäß die Stativsäule 4 seitlich neben dem Stativfuß 1 und dem Querhaupt 5 am hinteren - also dem Betrachter 11 abgewandten - Ende des Geräts. Die "C"-Form in Frontansicht wird hier also dadurch realisiert, daß die Stativsäule 4 - statt hinter dem Stativfuß 1 und dem Querhaupt 5 - neben dem Stativfuß 1 angeordnet und das Querhaupt 5 in einem Abstand über dem Stativfuß 1 in derselben Orientierung wie dieser seitlich an der Stativsäule 4 montiert ist.

Die Anordnung der Stativsäule 4 im rückwärtigen Bereich des Mikroskopstativs wird in **Fig. 1d** verdeutlicht, in der das Mikroskopstativ in der Ansicht von oben (Draufsicht) dargestellt ist. Man erkennt das weitausladende Querhaupt 5, das den darunter in einem Abstand angeordneten Stativfuß 1 verdeckt. Auch der Objekttisch 3 ist weitgehend verdeckt. Erkennbar ist die Okulareinrichtung 8 am Querhaupt 5. Wiederum dargestellt sind die horizontale optische Achse 9 durch das Querhaupt 5 sowie die vertikale optische Achse 10, die in dieser Ansicht nur als Punkt dargestellt ist. Ein Bediener 20 blickt in die Okulareinrichtung 8. Im hinteren Bereich des Querhaupts 5 ist seitlich die Stativsäule 4 angeordnet, wobei die hintere Fläche 12 der Stativsäule 4 mit der hinteren Fläche 14 des Querhaupts 5 abschließt. Die Stativsäule 4 ist in diesem Ausführungsbeispiel am rechten hinteren Ende des Stativs angeordnet. Eine Anordnung am linken hinteren Ende des Stativs wäre ebenso denkbar, ist aber ungewöhnlich, da die automatische Beschickung bei Inspektionsmikroskopen in der Regel von links erfolgt.

Insbesondere die **Figuren 1c** und **1d** demonstrieren die freie Beschickbarkeit des neuen Mikroskopstativs sowohl von vome als auch links und rechts und nunmehr erstmals auch von der Rückseite aus. Wie in **Fig. 1c** besonders deutlich zu erkennen, ist der Zugang von der rückwärtigen Seite des Mikroskopstativs zum ausgewählten Arbeitsobjektiv 7 in der Position der vertikalen optischen Achse 10 frei zugänglich. Damit läßt sich das neue Mikroskopstativ in idealer Weise in der von der Halbleiterindustrie gewünschten Form in der Fertigung in Clustem integrieren.

Durch große Verbindungsflächen zwischen Stativfuß 1, Stativsäule 4 und Querhaupt 5, wie sie in den **Figuren 1a-d** dargestellt sind, wird auch die erforderliche Statik erreicht, die bei der ungewöhnlichen Anordnung von Stativsäule 4 zu Querhaupt 5 und Stativfuß 1 und der weiten Ausladung des Querhaupts 5 dem ersten Anschein nach nicht erreichbar ist. Es erwies sich überraschenderweise als realisierbar, daß das erfindungsgemäße Stativ, allen statischen und thermischen Anforderungen im Einsatz - vor allem im Verbund innerhalb einer automatisierten Fertigungs-"Straße" - vollauf genügt, wobei Konstruktionsparameter unter Einsatz der Finite-Elemente-Methode ermittelt wurden. Um die Inspektion auch großer Objekte problemlos zu ermöglichen, sind der Stativfuß 1 und das Querhaupt 5 weit ausladend.

In einer besonders vorteilhaften Ausführung eignet sich das neue Mikroskop selbst zur Untersuchung extrem großflächiger Objekte, wie beispielsweise 400-mm-Wafer oder sogar Flachbildschirmen. Diese Ausführung ist in den **Figuren 2a-d** dargestellt.

In **Fig. 2a** ist erkennbar, daß die Stativsäule 4 mit ihrer hinteren Fläche 12 um ein großes Stück bis hinter die hintere Fläche 14 des Querhaupts 5 und die hintere Fläche 13 des Stativfußes 1 gerückt ist. **Fig. 2b** zeigt, daß zur Realisierung dieser Ausführungsform die Stativsäule 4 an ihrem oberen Ende und an ihrer Basis nach vome stark verbreitert wurde. Zwischen einer oberen Fläche 16 einer unteren Säulenende-Verbreiterung 15 und einer unteren Fläche 17 einer oberen Säulenende-Verbreiterung 15 ergibt sich ein freier Arbeitsbereich, z. B. zum Verfahren des Objekttisches 3. Durch die beiden Säulenende-Verbreiterungen 15 vor ihre zurückgesetzte Säulenvorderfläche 18 ist ebenso eine große Verbindungsfläche zwischen dem Stativfuß 1 und der Stativsäule 4 bzw. dem Querhaupt 5 und der Stativsäule 4 wie in dem in **Figuren 1a-d** dargestellten Ausführungsbeispiel geschaffen und damit eine gute Statik gewährleistet. Diese Verbindungsfläche 19 ist insbesondere gut aus **Fig. 2d** zu erkennen. Die hintere Fläche 12 der Stativsäule 4 ist aus der Sicht des Bedieners 20 weit hinter die hintere Fläche 14 des Querhaupts 5 versetzt. Die Verbreiterung 15 der Stativsäule 4 ist hier mit eingezeichnet, und die zurückgesetzte Säulenvorderfläche 18 ist verdeckt und daher gestrichelt dargestellt.

**Fig. 2c** zeigt, daß auch in dieser vorteilhaften Ausführungsform die neue "C"-Form des Stativs von vorne erkennbar ist. An der Stativsäule 4 sind die obere Fläche 16 der unteren Säulenverbreiterung 15 und die untere Fläche 17 der oberen Säulenverbreiterung 15 als Linien dargestellt. Auch hier ist die freie Beschickbarkeit des Arbeitsbereichs von allen Seiten, insbesondere aber nun auch von der rückwärtigen Seite des Mikroskopstativs, deutlich erkennbar.

Der Vergleich zwischen den **Figuren 1a** und **1b** und den entsprechenden **Figuren 2a** und **2b** läßt bereits erkennen, daß der Verfahrbereich des Objekttisches 3 erheblich vergrößert wurde, so daß nun noch wesentlich größere Proben untersucht werden können. Der tatsächliche Gewinn bei der in den **Figuren 2a-d** dargestellten Ausführungsform des neuen Mikroskopstativs läßt sich erst erkennen, wenn man einen symmetrischen Verfahrbereich 21 des Objekttisches 3 im Vergleich betrachtet. So zeigt **Fig. 3a** das bereits in **Fig. 1d** gezeigte erfindungsgemäße Mikroskopstativ in der Ansicht von oben. Zusätzlich dargestellt ist der symmetrische Verfahrbereich 21 des Objekttisches 3. Es ist deutlich zu erkennen, daß der Tischverfahrbereich 21 durch die Position der Stativsäule 4 begrenzt wird.

**Fig. 3b** zeigt die vorteilhafte Ausführungsform des erfindungsgemäßen Mikroskopstativs, die bereits in **Fig. 2d** in der Ansicht von oben dargestellt ist. Zusätzlich dargestellt ist der symmetrische Tischverfahrbereich 21. Auch er wird hier durch die Position der Stativsäule 4 begrenzt. Durch die nochmals zurückversetzte Position der Stativsäule 4 und damit der zurückgesetzten Säulenvorderfläche 18 ist hier in **Fig. 3b** deutlich erkennbar ein wesentlich größerer Tischverfahrbereich 21 realisiert als in **Fig. 3a**. Damit zeigt sich, daß das in den **Figuren 2a-d** dargestellte zweite Ausführungsbeispiel des erfindungsgemäßen Mikroskopstativs sich insbesondere zur Untersuchung sehr großflächiger Objekte, wie beispielsweise zur Untersuchung von Flachbildschirmen und ähnlich großformatigen Objekten, eignet. Die in der **Fig. 2b** dargestellte und bereits weiter oben erläuterte Verbreiterung 15 der Stativsäule 4 am oberen Ende und an ihrer Basis liegt außerhalb des Tischverfahrbereiches 21 und beeinträchtigt diesen daher nicht.

**Fig. 4b** zeigt eine dritte vorteilhafte Ausführungsform des erfindungsgemäßen Mikroskopstativs für andere als beispielsweise Waferuntersuchungen, in der die Stativsäule 4 an hohe Untersuchungsobjekte angepaßt werden kann. Dazu kann in die Stativsäule 4 oder unter ihrer Basis ein Verlängerungsmodul 22 montiert werden, welches die Stativsäule 4 im gewünschten Maß verlängert. Das Maß der Säulenverlängerung 23 ist an dem zum Vergleich in **Fig. 4a** ebenfalls dargestellten unveränderten Mikroskopstativ gemäß **Fig. 1c** dargestellt. Das am oberen Ende der Stativsäule 4 montierte Querhaupt 5 wird dabei in dem Maße der Säulenverlängerung 23 angehoben, so daß sich der Abstand des Querhaupts 5 zum Stativfuß 1 deutlich vergrößert. Somit ist es dann möglich, auch Objekte mit größerer Dimensionierung in z-Richtung zur Untersuchung auf den Objekttisch 3 aufzulegen. Zur Verdeutlichung ist das Maß der Säulenverlängerung 23 im Arbeitsbereich des Objektivs 7 ebenfalls dargestellt.

indem die freie Beschickungsmöglichkeit des erfindungsgemäßen Mikroskopstativs für großflächige Objekte von allen vier Seiten, insbesondere erstmals nun auch von hinten, durch die eigentliche Konstruktion des Mikroskopstativs erzielt wird, kann auf die Verwendung spezieller zusätzlicher Transportvorrichtungen verzichtet werden. Das heißt, das neue Mikroskop kann in einem Cluster integriert und von hinten direkt mit Wafem beschickt werden. Eine umständliche und kostenintensive Adaption des Feeders an das Transportsystem des Clusters ist nicht mehr nötig. Damit bringt das neue Mikroskop allein aufgrund seiner baulichen Konzeption keine zusätzlichen kontaminationserhöhenden Bauelemente in den Reinraum ein. Seine Stellfläche entspricht vergleichbaren bekannten Inspektionsmikroskopen.

Die Erfindung ist nicht auf auf die dargestellten konkreten Ausführungsformen beschränkt. Vielmehr sind auch modulartig zusammengesetzte Raumformen von Mikroskopstativen von dem erfindungsgemäßen Bauprinzip mit umfaßt.

### Bezugszeichenliste

- 1.: Stativfuß
- 2.: Kondensor
- 3.: Objekttisch
- 4.: Stativsäule
- 5.: Querhaupt
- 6.: Objektiveinrichtung
- 7.: Objektiv
- 8.: Okulareinrichtung
- 9.: horizontale optische Achse des Querhaupts 5
- 10.: vertikale optische Achse durch Objektiv 3 und Kondensor 2
- 11.: Betrachter
- 12.: hintere Fläche der Stativsäule 4
- 13.: hintere Fläche des Stativfußes 1
- 14.: hintere Fläche des Querhaupts 5
- 15.: Säulenende-Verbreiterung
- 16.: obere Fläche der unteren Säulenende-Verbreiterung
- 17.: untere Fläche der oberen Säulenende-Verbreiterung
- 18.: zurückgesetzte Säulenvorderfläche
- 19.: Verbindungsfläche
- 20.: Bediener
- 21.: Verfahrbereich des Objekttisches 3
- 22.: Verlängerungsmodul
- 23.: Maß der Säulenverlängerung

## Patentansprüche

1. Mikroskopstativ für ein Waferinspektionsmikroskop,
- mit einem einen Objekttisch (3) lagernden Stativfuß (1), einer vertikalen Stativsäule (4) und einem eine Objektiveinrichtung (6) und eine Okulareinrichtung (8) tragenden Querhaupt (5),
- wobei die Stativsäule (4) mit dem rückwärtigen, vom Beobachter abgewandten Ende des Stativfußes (1) und des Querhaupts (5) verbunden ist und zusammen mit diesen eine c-förmige, zum Beobachter hin offene Querschnittsform des Mikroskopstativs definiert,
**dadurch gekennzeichnet, daß**
- die Stativsäule (4) nicht an die vom Beoachter abgewandte Rückseite des Stativfußes (1) und des Querhaupts (5), sondern unmittelbar daneben, an deren rechte oder linke Seite angesetzt ist,
- wodurch eine direkte, geradlinige Beschickung des Objekttisches (3) mit zu untersuchenden Wafem von der Rückseite des Mikroskops her in Beobachterrichtung gewährleistet ist.

2. Mikroskopstativ nach Anspruch 1, **dadurch gekennzeichnet, daß** die vom Beobachter abgewandte Rückseite der Stativsäule (4) bündig mit den Rückseiten des Stativfußes (1) und des Querhaupts (5) abschließt.

3. Mikroskopstativ nach Anspruch 1, **dadurch gekennzeichnet, daß** die vom Beobachter abgewandte Rückseite der Stativsäule (4) gegenüber den Rückseiten des Stativfußes (1) und des Querhaupts (5) vom Beobachter weg zurückversetzt ist.

4. Mikroskopstativ nach Anspruch 3, **dadurch gekennzeichnet, daß** die Stativsäule (4) zum Stativfuß (1) und zum Querhaupt (5) hin in Beobachterrichtung eine Verbreiterung (15) entlang des Stativfußes (1) und des Querhauptes (5) aufweist, über welche die Stativsäule (4) mit dem Stativfuß (1) und dem Querhaupt (5) verbunden ist.

5. Mikroskopstativ nach einem der Ansprüche 1 bis 4, **dadurch gekennzeichnet, daß** die Stativsäule (4) vermittels eines zusätzlich montierbaren Verlängerungsmoduls (22) in ihrer Höhe verlängerbar ist, wobei das Verlängerungsmodul (22) vorzugsweise unter der Basis der Stativsäule (4) an diese ansetzbar ist.

6. Mikroskopstativ nach einem der Ansprüche 1 bis 5, **dadurch gekennzeichnet, daß** das Mikroskopstativ einstückig oder, alternativ hierzu, modular aufgebaut ist.

## Claims

1. Microscope stand for a wafer inspection microscope, comprising a stand foot (1) supporting an object table (3), a vertical stand column (4) and a crosshead (5) carrying an objective device (6) and an eyepiece device (8), wherein the stand column (4) is connected with the rearward end, which is remote from the observer, of the stand foot (1) and of the crosshead (5) and defines together with these a C-shaped cross-sectional shape, which is open towards the observer, of the microscope stand, **characterised in that** the stand column (4) is attached not to the rear side of the stand foot (1) and of the crosshead (5) remote from the observer, but directly thereagainst at the righthand or lefthand side thereof, whereby a direct, linear loading of the object table (3) with wafers, which are to be investigated, from the rear side of the microscope in the direction of the observer is ensured.

2. Microscope stand according to claim 1, **characterised in that** the rear side, which is remote from the observer, of the stand column (4) terminates flush with the rear sides of the stand foot (1) and of the crosshead (5).

3. Microscope stand according to claim 1, **characterised in that** the rear side, which is remote from the observer, of the stand column (4) is rearwardly offset relative to the rear sides of the stand foot (1) and of the crosshead (5) in direction away from the observer.

4. Microscope stand according to claim 3, **characterised in that** the stand column (4) has an enlargement (15) along the stand foot (1) and the crosshead (5) in the direction of the observer towards the stand foot (1) and crosshead (5), by way of which enlargement the stand column (4) is connected with the stand foot (1) and the crosshead (5).

5. Microscope stand according to one of claims 1 to 4, **characterised in that** the stand column (4) is extensible in its height by means of an additionally mountable extension module (22), wherein the extension module (22) is attachable to the stand column (4) preferably under the base thereof.

6. Microscope stand according to one of claims 1 to 5, **characterised in that** the microscope stand is constructed integrally or alternatively thereto in modular manner.

## Revendications

1. Statif de microscope pour un microscope d'inspection de pastilles,
- avec un pied de statif (1) recevant une platine (3), une colonne verticale de statif (4) et une tête transversale (5) portant un système d'objectif (6) et un système d'oculaire (8)
- la colonne de statif (4) étant reliée à l'extrémité vers l'arrière, éloignée de l'observateur, du pied de statif (1) et de la tête transversale (5) et définit ainsi avec ceux-ci, une forme en section transversale en C ouvert vers l'observateur pour le statif du microscope,
**caractérisé en ce que**
- la colonne de statif (4) n'est pas placée au côté arrière éloigné de l'observateur du pied (1) du statif et de la tête transversale (5) mais directement à côté, du côté droit ou gauche,
- ainsi un chargement direct, en ligne droite de la platine (3) avec les pastilles à examiner est garanti à partir de l'arrière du microscope dans la direction de l'observateur.

2. Statif de microscope selon la revendication 1, **caractérisé en ce que** le côté arrière de la colonne de statif (4) qui est tourné au loin de l'observateur se raccorde au côté arrière du pied du statif (1) et de la tête transversale (5).

3. Statif de microscope selon la revendication 1, **caractérisé en ce que** le côté arrière de la colonne de statif (4) tourné au loin de l'observateur est décalé vers l'arrière par rapport au côté arrière du pied de statif (1) et de la tête transversale (5) par rapport à l'observateur.

4. Statif de microscope selon la revendication 3, **caractérisé en ce que** la colonne de statif (4) présente par rapport au pied du statif (1) et à la tête transversale (5), dans la direction de l'observateur, un élargissement (15) le long du pied (1) du statif et de la tête transversale (5) par lequel la colonne de statif (4) est reliée au pied de statif (1) et à la tête transversale (5).

5. Statif de microscope selon l'une quelconque des revendications 1 à 4, **caractérisé en ce que** la colonne de statif (4) peut être prolongée en hauteur au moyen d'un module de prolongement (22) montable en supplément, le module de prolongement (22) pouvant avantageusement être placé sous la base de la colonne du statif.

6. Statif de microscope selon l'une quelconque des revendications 1 à 5 **caractérisé en ce que** le statif de microscope est de construction en une pièce ou, en alternative, modulaire.
